# EUROPEAN PATENT APPLICATION

(11) **EP 3 987 965 A1**
(43) Date of publication of application: **27.04.2022**
(21) Application number: 21201089.6
(22) Date of filing: 06.10.2021
(51) Int. Cl.: A41B 11/00, A41B 11/12, B29C 65/18, B29C 65/78, B29C 65/00, D06M 15/19, D06N 3/12, B29L 31/50

(54) **MAKING APPARATUS OF NONSLIP SOCKS**

(30) Priority: 06.10.2020 KR 20200128682
(71) Applicant: We foot Technology Inc., Bucheon-Si, Gyeonggi-do, 14693 (KR)
(72) Inventor: KIM, Tae Hyo, 14693 Bucheon-Si, Gyeonggi-do (KR)
(74) Representative: M. Zardi & Co S.A.

(57) **Abstract**

An apparatus for manufacturing non-slip socks, which arranges a gripping member (2) on a surface of a sock main body (1) fitted to a mold and presses and bonds the gripping member (2) to the surface of the sock main body (1) by using a press, the apparatus comprising:

a support frame (10) in which a guide groove (11) is formed in an upper portion thereof, and a driving motor (12) is installed at one side of a lower portion thereof;

a rotation table (20) seated in the guide groove (11) and connected with the driving motor (12) to rotate along the guide groove (11) by an operation of the driving motor;

a mold connection member (30) having one side connected to the rotation table (20) and the other side protruding in an outward direction of the rotation table (20) and provided in plurality to be arranged radially around a center of the rotation table (20);

a mold (40) having one side connected with the mold connection member (30) and an upper portion in which a fabric guide groove (43a) in which a fabric (3) to which the gripping member (2) is bonded is seated is formed, and to which the sock main body (1) is fitted;

a press device (50) installed adjacent to one side of the support frame (10) and comprising a lower mold (50a) configured to support a lower portion of the mold (40), an upper mold (50b) spaced upward from the lower mold (50a), a heating wire (50c) installed in one of the lower mold (50a) and the upper mold (50b), and an actuator (50d) connected to one of the lower mold (50a) and the upper mold (50b) to elevate the connected one, so as to heat and press the sock main body (1) fitted to the mold (40), thereby bonding the gripping member (2) to the sock main body (1); and

a guide device (60) installed adjacent to one side of the support frame (10) and comprising a movable frame (61) vertically moving toward the mold (40) to which the sock main body (1) is fitted, wherein a fabric guide member (62), in which a guide hole (62a) configured to guide an arranged position of the fabric (3) on the sock main body (1) fitted to the mold (40) is formed, is installed on the movable frame (61),

wherein the mold (40) comprises:

a connection plate (41) having one side connected to the mold connection member (30);

a seat member (42) installed on the connection plate (41) and on which the fabric (3) to which the gripping member (2) is bonded is seated; and

an elevation member (43) in which a fabric guide groove (43a) through which the seat member (42) passes is formed therein and having a lower portion connected with the connection plate (41) through an elastic member (44) to vertically move by an upper pressure.

## Description

### CROSS-REFERENCE TO RELATED APPLICATIONS

This U.S. non-provisional patent application claims priority under 35 U.S.C. § 119 of Korean Patent Application No. 10-2020-0128682, filed on Oct. 6th, 2020, the entire contents of which are hereby incorporated by reference.

### TECHNICAL FIELD

The present invention relates to a manufacturing apparatus for manufacturing non-slip socks in which a gripping member that is a non-slip member is bonded to each of the inside and the outside thereof, and more particularly, to an apparatus for manufacturing non-slip socks, which is capable of exactly maintaining a state in which gripping members at the inside and the outside of the sock are misaligned and increasing productivity.

### BACKGROUND ART

A foot is a body part for maintaining a balance of a human body and supporting a body weight to absorb an impact and through which numerous blood vessels and nerves pass.

As a unit for protecting the foot, a footwear such as stockings, tights, outer socks, and socks is used.

The footwear may have a basic protection function and an additional function such as exercise performance improvement, injury prevention, and foot odor reduction through sweat absorption.

When the general footwears are used, slippage may be generated between an inner surface of the footwear and a sole or between an outer surface of the footwear and an inner surface of a shoe due to a low friction coefficient of fiber materials selected for the footwears.

For example, when a woman wearing the footwear such as stockings and outer socks moves while wearing high heels (shoes) in which a heel is high, a weight is biased to a front side, and a force is concentrated on a toe to generate pain and stiffness in an instep, an ankle, and even a muscle of a thigh, thereby generating pain and fatigue of the foot.

Also, slippage is generated between the stocking and the foot due to the weight and a forward force for each step when walking, and the slippage between the stocking and the foot applies an impact to the toe. This impact is continuously generated during walking.

Also, in case that a rear foot is slipped, as the rear foot is deviated to the outside further when wearing the high heels, the ankle may be easily bent, and walking may be unstable to cause a sprain damage on the ankle.

According to the report of Health Insurance Review and Assessment Service, there were 1.6 million ankle sprain patients in the year of 2010, and the number of the ankle sprain patients was increased to 1.86 million in the year of 2014.

Also, in terms of sports activity such as running and skating, when a wearer changes a speed or a direction or suddenly starts or stops during the sports activity, a phenomenon in which a foot of the wearer is slipped in a footwear main body is generated, and a phenomenon in which the footwear main body is slipped in a shoe is generated.

These phenomena are generated because of an insufficient gripping capability between the foot ant he footwear main body and between the footwear main body and the shoe.

As described above, shortage of the sufficient gripping capability causes injuries on an ankle or a knee when a sportsman is slipped.

In order to prevent the injuries caused by the slippage phenomenon and improve an exercise performance, a patent "Non slip socks for sports" (Korean Patent Registration No. 10-1686547, patent document 1) and a patent "Non slip insole for sports" (Korean Patent Registration No. 10-1638404, patent document 2) are disclosed.

The above patent documents 1 and 2 relate to a cross-sectional structure of a material for strengthening a non-slip function in a sock or an insole and a manufacturing method thereof.

As another technology related to the gripping material, a patent "Construction of a gripping fabric" (US Patent Registration No. 9,498,003, patent document 3) discloses a technology of forming a non-slip material on each of an inner surface and an outer surface of a footwear main body such that the non-slip material on the inner surface and the non-slip material on the outer surface are overlapped or coincided with each other on a plane to maximize an exercise performance.

The patent document 3 relates to a technology for arranging materials for strengthening the non-slip function, and the technology maximizes a friction force at a contact portion between the footwear main body and the foot and between the footwear main body and the shoe based on each point at which slippage is generated through overlapping or integration.

When reviews of users who substantially purchases and uses a product disclosed in the patent document 3 are analyzed, it is shown that the slippage prevention function improves, but excessive non-slip function causes injuries on the foot of the wearer.

This phenomenon is generated such that when the foot of the wearer and the non-slip material of the sock are not in close contact with each other (when close contact between the sole and the inner non-slip material of the footwear main body and close contact between the inside of the shoe and the outer non-slip material of the footwear main body at the same point are performed), a force applied to a skin extremely increases because a weight of the wearer is transferred to the same point when the weight is applied to the corresponding point.

Here, as the non-slip material has an excellent non-slip performance, an unbearable force is applied to the skin.

Particularly, since a side skin adjacent to the sole has a weak skin in the foot of the wearer, an injury may be further easily generated in the side skin.

In addition, the foot may feel foreign body sensation when wearing the footwear main body in which the non-slip material is formed by a method such as coating to protrude at the same point of the outside and the inside of the footwear main body, and the foreign body sensation is changed into pressing sensation as a pressure is continuously applied when wearing for a long time. Here, this foreign body sensation and the pressing sensation further increases as a thickness of the sock decreases to cause sore and fever on the skin of the wearer, which contacts the non-slip material, and even generate a blister and an injury.

In order to resolve the above-described limitation, the present applicant applied for and registered with a patent "Non slip foot wear with separating cushion part" (Korean Patent Registration No. 10-2002633, patent document 4).

The patent document 4 may prevent a skin damage by preventing an excessive non-slip function exceeding a required proper non-slip function as a gripping member is provided on each of an inside and an outside of a bottom of a sock in such a manner that the gripping members disposed on the inside and the outside are alternately arranged on a plane instead of being coincided with each other.

As a method for bonding a member having the above-described non-slip function to the surface of the sock, a patent "Construction of a gripping fabric" (Korean Patent Publication No. 10-2013-0109131, patent document 5) discloses a technology of arranging a gripping member attached to a release paper on each of upper and lower portion with respect to a surface of a sock and then pressing the gripping member simultaneously from above and below to bond the gripping member to a sock main body.

In case of the patent document 5, since the gripping members are disposed at the substantially same position, the gripping members may receive a proper pressure when heated and pressed by using a press and be bonded to the sock main body.

However, when the method as in the patent document 5 is applied to a case in which the gripping members are alternately arranged as in the patent document 4, a space opposite to a portion contacting the press may be in a spaced state or may not receive a sufficient pressure, and thus bonding through the press is not sufficiently performed.

When a temperature or a pressure of the press or a bonding time increases in order to resolve the above-described limitation, the sock main body may be damaged by heat.

Furthermore, when the gripping is applied to a thin sock except for a thick sport sock, the sock may be easily damaged according to a temperature, a pressure, and a time of the press. Thus, the method disclosed in the patent document 5 may not be substantially used.

In addition, although the gripping members disposed on the inside and the outside of the sock are not required to completely overlap each other in the method disclosed in the patent document 5, the gripping members disposed on the inside and the outside of the sock, which are not in overlap with each other as in the patent document 4, are required to be precisely set in position. However, the patent document 5 does not disclose a technical feature satisfying the feature of precisely setting the positions of the gripping members.

In recent years, demand for the sock of the patent document 4 increases in various sports fields in addition to the soccer and even increases in a field of general socks.

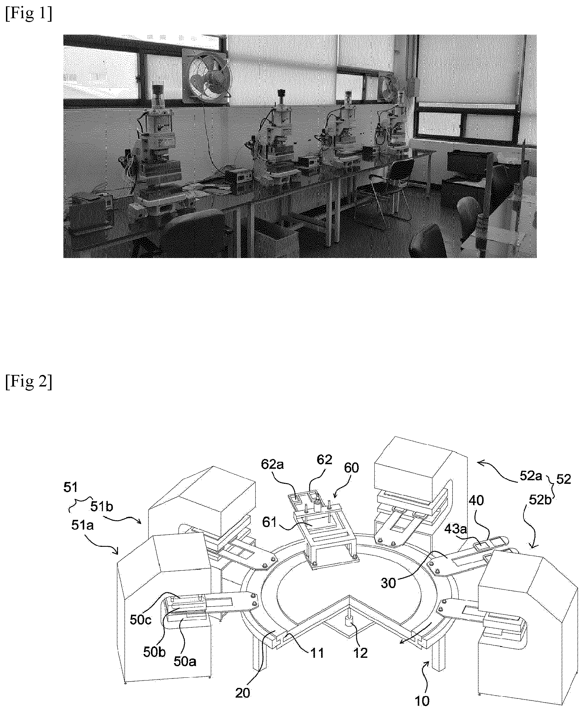

FIG. 1 is a photograph showing press devices arranged in a factory to manufacture the sock disclosed in the patent document 4. A worker sits in front of each press to manually and directly arrange and work the fabric with the gripping member bonded.

Because of the manual work, supply may not keep up with demand, and a selling price of the sock may increase.

### [Prior art document]

### [Patent document]

(Patent document 1) KR 10-1686547 (20161208)
(Patent document 2) KR 10-1638404 (20160705)
(Patent document 3) US 9,498,003 (20161122)
(Patent document 4) KR 10-2002633 (2019.07.16)
(Patent document 5) KR 10-2013-0109131 (2013.10.07)

### DISCLOSURE OF THE INVENTION

### TECHNICAL PROBLEM

The present invention provides an apparatus for manufacturing non-slip socks, which improves accuracy of positions of gripping members disposed on an inside and an outside of a sock and increases a production speed when a sock in which the gripping members disposed on the inside and the outside thereof are alternately arranged as in the patent document 4 is manufactured, in order to resolve typical technical limitations.

More specifically, as molds to which socks are mounted are radially arranged on a rotation table, and a mold to which the gripping member is bonded is disposed on the inside of the sock and a mold to which the gripping member is bonded is disposed on the outside of the sock along a circumference of the rotation table, manufacturing of the socks may be continuously and quickly performed.

Particularly, as a groove for guiding a position of the fabric (to which the gripping member is bonded) to be bonded to the inside of the sock is formed in a mold rotating along the rotation table, and a guide device for guiding a position of the fabric to be bonded to the outside of the sock is provided at one side of a circumference of the rotation table, the accuracy of bonding positions of the fabric on the inside and the outside of the sock may increase.

In addition, in case that the fabric is disposed in the groove formed in the mold, the sock is deviated from the groove when the sock is inserted thereto because of a narrow depth of the groove. Here, as the mold includes a connection plate and an elevation member that is elastically connected to an upper portion of the connection plate, movement of the fabric may be restricted by maintaining a great depth of the groove before being pressed by a press.

Also, as a plurality of press devices for heating and pressing the inside and the outside of the sock are consecutively arranged to sequentially perform an initial temporary bonding, a cooling, and then a main bonding, a phenomenon of the sock main body damaged by heat may be minimized.

### TECHNICAL SOLUTION

In order to achieve the objects, an apparatus for manufacturing non-slip socks according to the present invention, which arranges a gripping member 2 on a surface of a sock main body 1 fitted to a mold and presses and bonds the gripping member 2 to the surface of the sock main body 1 by using a press, includes: a support frame 10 in which a guide groove 11 is formed in an upper portion thereof, and a driving motor 12 is installed at one side of a lower portion thereof; a rotation table 20 seated in the guide groove 11 and connected with the driving motor 12 to rotate along the guide groove 11 by an operation of the driving motor; a mold connection member 30 having one side connected to the rotation table 20 and the other side protruding in an outward direction of the rotation table 20 and provided in plurality to be arranged radially around a center of the rotation table 20; a mold 40 having one side connected with the mold connection member 30 and an upper portion in which a fabric guide groove 43a in which a fabric 3 to which the gripping member 2 is bonded is seated is formed, and to which the sock main body 1 is fitted; a press device 50 installed adjacent to one side of the support frame 10 and including a lower mold 50a configured to support a lower portion of the mold 40, an upper mold 50b spaced upward from the lower mold 50a, a heating wire 50c installed in one of the lower mold 50a and the upper mold 50b, and an actuator 50d connected to one of the lower mold 50a and the upper mold 50b to elevate the connected one, so as to heat and press the sock main body 1 fitted to the mold 40, thereby bonding the gripping member 2 to the sock main body 1; and a guide device 60 installed adjacent to one side of the support frame 10 and including a movable frame 61 vertically moving toward the mold 40 to which the sock main body 1 is fitted, wherein a fabric guide member 62, in which a guide hole 62a configured to guide an arranged position of the fabric 3 on the sock main body 1 fitted to the mold 40 is formed, is installed on the movable frame 61.

In the above-described configuration, the press device 50 may include: an one side press device 51 arranged in one side direction along a circumference of the support frame 10 based on the guide device 60 to heat and press the fabric 3 disposed between the sock main body 1 and the mold 40; and a the other side press device 52 arranged in the other side direction along the circumference of the support frame 10 based on the guide device 60 to heat and press the fabric 3 disposed outside the sock main body 1 fitted to the mold 40.

Also, the one side press device 51 may include a first one side press device 51a and a second one side press device 51b, which have a predetermined angle with respect to a center of the support frame 10, the other side press device 52 may include a first the other side press device 52a and a second the other side press device 52b, which have an angle that is two times of the angle of the first one side press device 51a and the second one side press device 51b, and the fabric 3 that is firstly heated and pressed to the outside of the sock main body 1 between the first the other side press device 52a and the second the other side press device 52b may be detached from the gripping member 2.

Also, the mold 40 may include: a connection plate 41 having one side connected to the mold connection member 30; a seat member 42 installed on the connection plate 41 and on which the fabric 3 to which the gripping member 2 is bonded is seated; and an elevation member 43 in which a fabric guide groove 43a through which the seat member 42 passes is formed therein and having a lower portion connected with the connection plate 41 through an elastic member 44 to vertically move by an upper pressure.

Furthermore, the elastic member 44 may be made of flexible foam, and a metallic plate spring 45 may be further installed between the connection plate 41 and the elevation member 43.

### ADVANTAGEOUS EFFECTS

According to the present invention, when the sock in which the gripping members disposed on the inside and the outside thereof are alternately arranged as disclosed in the patent document 4 is manufactured, the accuracy of the positions of the gripping members disposed on the inside and the outside may increase, and the production speed may improve.

More specifically, as the molds to which socks are mounted are radially arranged on the rotation table, and the mold to which the gripping member is bonded is disposed at the inside of the sock and the mold to which the gripping member is bonded is disposed at the outside of the sock along the circumference of the rotation table, the manufacturing of the socks may be continuously and quickly performed.

Particularly, as the groove for guiding the position of the fabric (to which the gripping member is bonded) to be bonded to the inside of the sock is formed in the mold rotating along the rotation table, and the guide device for guiding the position of the fabric to be bonded to the outside of the sock is provided at one side of the circumference of the rotation table, the accuracy of the bonding positions of the fabrics on the inside and the outside of the sock may increase.

In addition, in case that the fabric is disposed in the groove formed in the mold, the sock is deviated from the groove when the sock is inserted thereto because of the narrow depth of the groove. Here, as the mold includes the connection plate and the elevation member that is elastically connected to the upper portion of the connection plate, the movement of the fabric may be restricted by maintaining the great depth of the groove before being pressed by the press.

Also, as the plurality of press devices for heating and pressing the inside and the outside of the sock are consecutively arranged to sequentially perform the initial temporary bonding, the cooling, and then the main bonding, the phenomenon of the sock main body damaged by heat may be minimized.

### BRIEF DESCRIPTION OF THE DRAWINGS

FIG. 1 is a photograph showing a typical apparatus for manufacturing non-slip socks.
FIG. 2 is a partially cut perspective view illustrating the apparatus for manufacturing the non-slip socks according to the present invention.
FIG. 3 is a schematic plan view illustrating the apparatus for manufacturing the non-slip socks according to the present invention.
FIG. 4 is an exploded perspective view illustrating a configuration example of a mold according to the present invention.
FIG. 5 is a cross-sectional flowchart illustrating a process of bonding a gripping member to the inside of the sock according to the present invention.

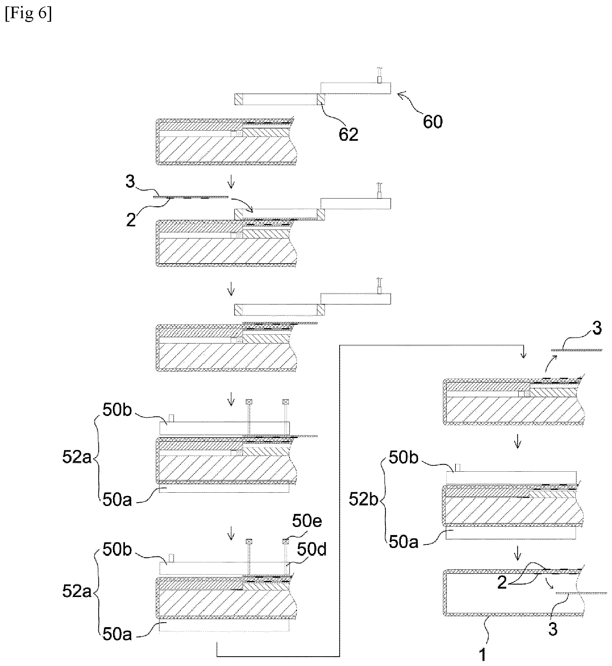

FIG. 6 is a cross-sectional flowchart illustrating a process of bonding a gripping member to the outside of the sock according to the present invention.
FIG. 7 is a cross-sectional view illustrating another example of the mold according to the present invention.
FIG. 8 is a photograph showing a state of a fabric to which a gripping member is bonded according to the present invention.
FIG. 9 is a cross-sectional view illustrating a state of the gripping member from which the fabric is removed.

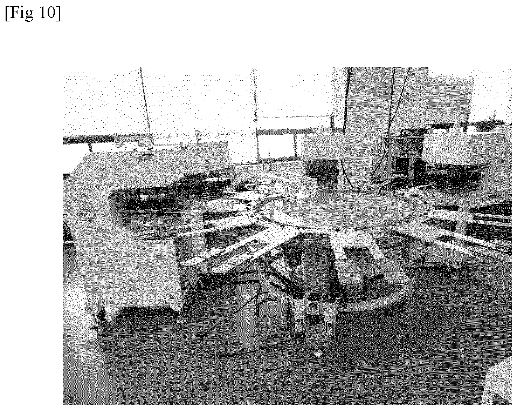

FIG. 10 is a photograph showing an apparatus for manufacturing non-slip socks according to the present invention.

### MODE FOR CARRYING OUT THE INVENTION

The present invention relates to an apparatus for manufacturing non-slip socks, which fits a sock main body 1 to a mold and then arranges a gripping member 2 on a surface of the sock main body 1 to press-bond the gripping member 2 to the surface of the sock main body 1 by using a press.

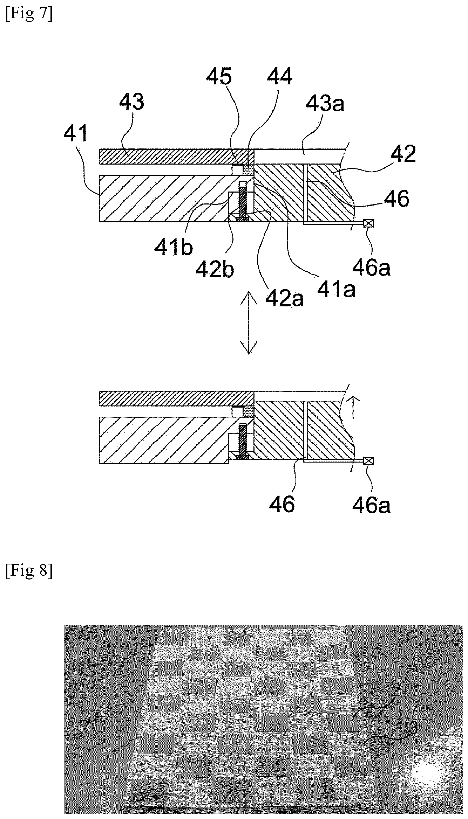

FIG. 8 is a photograph showing a state in which the gripping member 2 is bonded to a fabric 3.

The gripping member 2 may be made of various materials for exhibiting a non-slip function. Preferably, the gripping member 2 may be made of a wet-type polyurethane sheet.

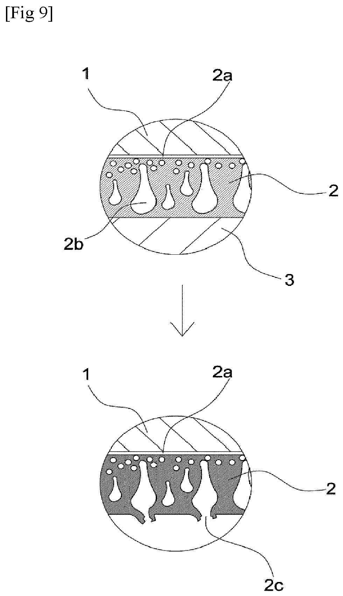

The wet-type polyurethane sheet is disclosed in the patent document 4 and illustrated in FIGS. 8 and 9.

Specifically, a gripping surface may be formed: by manufacturing the wet-type polyurethane sheet by using one of the fabric 3 or a polyester film as a carrier and then removing the carrier to obtain a surface from which the carrier is removed and use the surface as the gripping surface; by impregnating and coating a non-woven fabric with a polyurethane resin in a process of manufacturing the wet-type polyurethane sheet and then removing a surface skin of sheet manufactured after performing a process for solidifying and removing DMF to obtain a surface from which the surface skin is removed and use the surface as the gripping surface; or by manufacturing the wet-type polyurethane sheet by using one of the fabric 3 or the polyester film as a carrier and then removing a surface layer at an opposite surface of the carrier by using a sandpaper to use the surface as the gripping surface.

The polyurethane sheet manufactured by the above method has a structure, in which numerous pores are formed therein, external moisture is introducible to a space around a frame thereof, and all or a portion of the introduced moisture is dischargeable to a bottom surface or a wall surface, and form the gripping surface by forming a micro-uneven surface through the above-described method such as carrier removal, surface skin removal, or sandpaper removal.

The gripping member 2 in FIG. 9 has a structure in which a column cell 2b having a roly-poly toy shape is formed therein.

In addition, the gripping member 2 has a structure in which a non-slip groove 2c communicating with the column cell 2b is formed as a portion of the column cell 2b is torn when the carrier such as the fabric 3 is detached.

A feature of forming the gripping member 2 having a predetermined pattern on the fabric 3 may be performed by using a roll cutter.

In addition, a hot-melt adhesive 2a is applied to the exposed surface of the gripping member 2 so that bonding using a heat press is easily performed and bonded to the sock main body 1 when pressure and heat is transferred through the heat press.

In addition, in a finishing process of the roll cutter, the fabric is cut into a predetermined gap to have a rectangular shape as in FIG. 8.

Referring to FIG. 8, three or four gripping members are repeated in a direction from a left side to a right side on the picture.

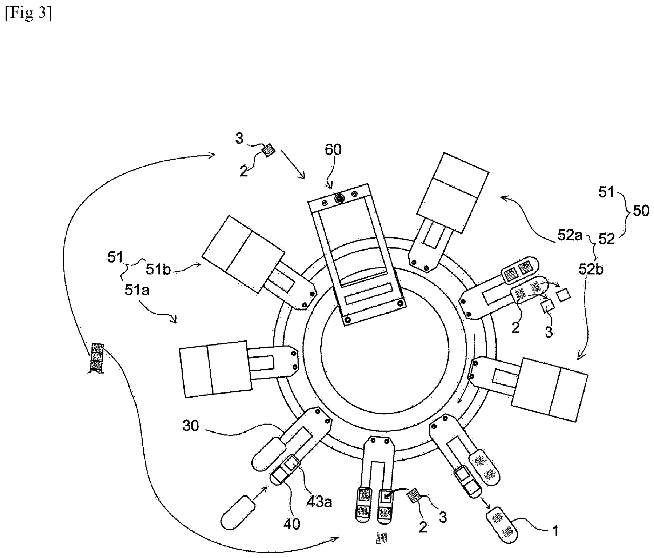

In this case, as schematically illustrated in FIG. 3, the fabric 3 cut in the roll cutter is manufactured such that the fabric in which four gripping members are disposed on an end thereof and the fabric in which three gripping members are disposed on an end thereof are continuously and alternately manufactured.

In this case, when the fabric in which four gripping members are disposed on the end thereof is arranged and bonded to an inside of the sock, the in which three gripping members are disposed on the end thereof is arranged and bonded to an outside of the sock.

Since a bonding state between the fabric 3 and the gripping member 2 is easily broken when a person holds and tears by hands, when the fabric 3 is pulled by hands in a state in which the gripping member 2 is bonded to the sock main body 1 through the hot-melt adhesive and the press, the gripping member 2 and the fabric 3 are easily detached from each other.

Hereinafter, an apparatus for manufacturing non-slip socks of the present invention, which manufactures non-slip socks by bonding the gripping member on the fabric to the socks will be described.

The apparatus for manufacturing non-slip socks of the present invention includes a support frame 10, a rotation table 20, a mold connection member 30, a mold 40, a press device 50, and a guide device 60.

As illustrated in FIGS. 2 and 3, the support frame 10 includes an upper plate having a circular shape, and a circular guide groove 11 in which the rotation table 20 is seated is formed in the upper table.

In addition, a driving motor 12 is installed at one side of a lower portion of the support frame 10.

The rotation table 20 has one side connected with the driving motor 12 and an upper portion seated in the guide groove 11 and rotates along the guide groove 11 by an operation of the driving motor.

Although an arrangement state between the rotation table 20 and the driving motor 12 in the drawing is simply illustrated for easy understanding, a structure and a connection relationship between the rotation table 20 and the driving motor 12 may be configured by various well-known structures allowing the rotation table 20 to rotate.

For example, a method of forming gear teeth in an inner circumferential surface of the rotation table 20, arranging a circular gear engaged with the gear teeth in an upper or lower portion of the support frame 10, and connecting the driving motor 12 to the gear may be used.

As illustrated in FIG. 2, the mold connection member 30 having one side connected to the rotation table 20 to rotate together with the rotation table 20.

The mold connection member 30 has the other side protruding in an outward direction of the rotation table 20, and a plurality of mold connection members 30 are arranged radially around to a center of the rotation table 20.

In the drawing, the other side of the mold connection member 30 includes two frames disposed in parallel so that two molds 40 are mounted thereto. Since socks typically include a pair of socks (two socks for left and right feet), the two frames are provided so that one pair of socks are manufactured at once.

As illustrated in FIG. 2, the mold 40 has one side connected with the mold connection member 30 and an upper portion in which a fabric guide groove 43a in which the fabric 3 with the gripping member 2 bonded is seated is formed, so that the sock main body 1 is fitted to the mold 40.

In case that the fabric guide groove 43a is formed in the mold 40, the mold 40 arranges the fabric 3 to which the plurality of gripping members 2 are bonded at an exact position when the gripping member 2 is bonded to the inside of the sock to increase a bonding position accuracy of the gripping member 2.

However, when a numeric value of a sum of a height of the fabric 3 and a height of the gripping member 2 is less than that of a depth of the fabric guide groove 43a, the gripping member 2 may not be bonded to the sock main body 1 through the press.

Furthermore, in case that the fabric guide groove 43a has a low depth, a phenomenon in which the fabric 3 is bonded to an inner circumferential surface of the sock when the sock is fitted to the mold 40 to move a position that is not a bonding target position is generated.

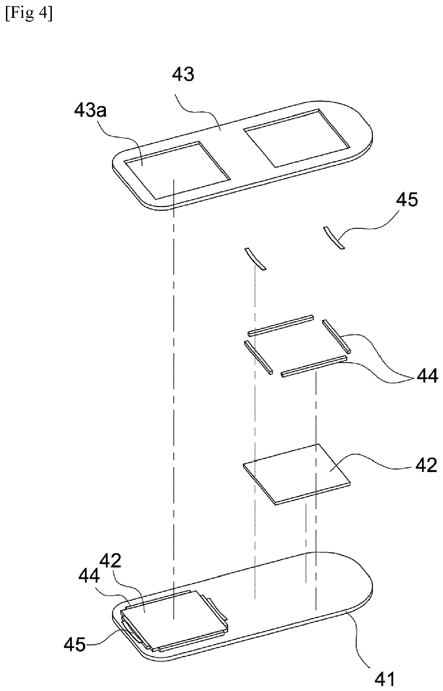

To restrict the above-described phenomenon, the mold 40 may include a connection plate 41, a seat member 42, and an elevation member 43 as illustrated in FIG. 4.

The connection plate 41 has an overall shape and a size, which correspond to an approximately foot shape so that the socks fit tight.

The seat member 42 may be installed on the connection plate 41, and the fabric 3 with gripping member 2 bonded is seated on the seat member 42.

Also, the elevation member 43 is configured such that the fabric guide groove 43a through which the seat member 42 passes is defined therein, and a lower portion thereof is connected to the connection plate 41 through an elastic member 44 to vertically move by an upper pressure.

Here, the elastic member 44 may be made of flexible foam such as a sponge. The elastic member 44 may be made of a material that is preferably resistant to heat and has a restoration force that is not weakened when a pressure is applied.

In order to prepare a case in which the restoration force of the elastic member 44 is reduced by receiving a repeated compressive force or by a thermal damage, a plate spring 45 having both rounded ends and made of a metal material may be further installed between the connection plate 41 and the elevation member 43 as illustrated in the drawing.

In case that the mold 40 is configured as described above, since the fabric guide groove 43a may have a great depth, the fabric 3 may be restricted from being separated from the fabric guide groove 43a due to friction of the inner circumferential surface of the sock main body 1 when the socks are fitted to the mold 40 after the fabric 3 is inserted to the fabric guide groove 43a.

Also, when a pressing operation is performed, a height of the elevation member 43 may be lowered, and thus the press may easily compress the gripping member 2.

Here, when a thickness of the gripping member 2 is varied according to the kind of the socks, or the elevation member 43 is not easily restored due to a damage of the elastic member 44, a height of the seat member 44 may be lowered to be simply and continuously used.

That is, the seat member 42 may adjust a height from the connection plate 41.

More specifically, as illustrated in FIG. 7, a through-hole 41a that is vertically perforated is formed to form the fabric guide groove 43a in the elevation member 43, and a stepped portion 41b obtained by bending a middle portion of an inner wall of the through-hole 41a in an outward horizontal direction is formed.

Here, the seat member 42 may be configured to adjust a height of a bottom thereof such that the seat member 42 has an upper portion inserted to the through-hole 41a and a lower portion forming a protruding portion 42a protruding in the outward horizontal direction, and an adjusting bolt 42b screw-coupled to the stepped portion 41b is formed to pass through the protruding portion 42a.

Also, as illustrated in FIG. 7, in order to further restrict the phenomenon in which the fabric 3 is bonded to the sock main body 1 due to friction or an electrostatic phenomenon, a suction hole 46 may be formed on the seat member 42, and a suction pump 46a connected to the suction hole 46 through a hose or the like may be provided.

In case that the suction pump 46a is operated when the socks are fitted to the mold 40 after the suction pump 46a is installed, and the fabric 3 is inserted to the fabric guide groove 43a, a phenomenon in which the fabric 3 is suctioned to the sock main body 1 by an air suction force may be further restricted.

Also, when the suction pump 46a is turned on and off in a short frequency after the pressing operation is finished, the fabric 3 may be easily detached from the gripping member 2, and when the suction pump 46a is operated in a state in which the fabric 3 is placed by using the guide device 60 to bond the gripping member 2 to an outside of the sock main body 1, and the rotation table 20 rotates toward a next press device, the fabric 3 disposed on the sock main body 1 may not be easily separated from the sock main body 1.

To this end, a plurality of suction holes 46 may be defined although only one suction hole 46 is illustrated in the drawing.

The press device 50 includes a typical heat press and is installed adjacent to one side of the support frame 10. Specifically, the press device 50 includes: a lower mold 50a for supporting a lower portion of the mold 40; an upper mold 50b spaced upward from the lower mold 50a; a heating wire 50c installed in one of the lower mold 50a and the upper mold 50b; and an actuator 50d connected to one of the lower mold 50a and the upper mold 50b to elevate the connected one. The press device 50 heats and presses the sock main body 1 fitted to the mold 40 to bond the gripping member 2 to the sock main body 1.

Illustrated is an example in which as the heating wire 50c is installed in the upper mold 50b, and the upper mold 50b is connected with the actuator 50d to vertically move and press the upper portion of the mold 40, the upper mold 50b heats and presses the sock main body 1 fitted to the mold so that the gripping member 2 is bonded to the sock main body 1.

However, only an upper portion or both upper and lower portions of the press device 50 may be operated.

More specifically, the press device 50 includes one side press device 51 for heating and pressing to bond the gripping member 2 to the inside of the sock main body 1 and a the other side press device 52 for heating and pressing to bond the gripping member 2 to the outside of the sock main body 1.

The two press devices are disposed as illustrated in FIGS. 2 and 3. That is, the one side press device 51 is disposed in one side direction along a circumference of the support frame 10 with respect to the guide device 60 to heat and press the fabric 3 disposed between the sock main body 1 and the mold 40.

The the other side press device 52 is disposed in the other side direction along the circumference of the support frame 10 with respect to the guide device 60 to heat and press the fabric 3 disposed outside the sock main body 1 fitted to the mold 40

Here, in case that the sock main body 1 has a small thickness or is easily damaged by heat, a phenomenon in which the sock main body 1 is damaged is generated when heated and pressed for a long time at once.

In order to prevent this phenomenon, the one side press device 51 may include a first one side press device 51a and a second one side press device 51b, and the the other side press device 52 may include a first the other side press device 52a and a second the other side press device 52b as illustrated in the drawing.

In a plan view of FIG. 3, since the first one side press device 51a and the second one side press device 51b are spaced a predetermined angle from each other with respect to a center of the support frame 10, the sock main body 1 is cooled while the mold 40 moves from the first one side press device 51a to the second one side press device 51b.

The first the other side press device 52a and the second the other side press device 52b of the the other side press device 52 have a predetermined angle therebetween as illustrated in the drawing, the angle therebetween is two times greater than that between the first one side press device 51a and the second one side press device 51b with respect to the center of the support frame 10.

Since the first the other side press device 52a heats and presses the gripping member 2 through the fabric 3 instead of directly heating and pressing the gripping member 2, the first the other side press device 52a has a long heating time and a higher heating temperature than the one side press device 51. In this case, since the sock main body 1 may be damaged, the fabric 3 is separated after a temporary bonding is firstly performed and before a main bonding is secondarily performed.

Here, although the fabric 3 may be manually separated, as illustrated in FIG, 6, a suction hole 50d may be formed in the upper mold 50b of the first the other side press device 52a, and a suction pump 50e connected to the suction hole 50d through a pipe may be provided in order to improve a productivity.

In this case, when the upper mold 50b moves upward after the pressing is finished, a suction force to the fabric 3 may be generated, so that the gripping member 2 and the fabric are easily detached.

In addition, although not shown, a blower for blowing the fabric 3 in a side direction to prevent the fabric 3 from falling to an upper portion of the lower mold 50a when an operation of the suction pump 50e is stopped.

As illustrated in FIGS. 2 and 3, the guide device 60 is installed adjacent to one side of the support frame 10 and arranges the fabric 3 at an exact position of the outside of the sock main body 1.

Specifically, the guide device 60 includes a movable frame 61 that vertically moves toward the mold 40 with the sock main body 1 fitted, and a fabric guide member 62 in which a guide hole 62a is formed and which guides an arrangement position of the fabric 3 on the sock main body 1fitted to the mold 40 is installed on the movable frame 61.

As the movable frame 61 moves downward when the mold 40 is disposed below the guide device 60, and the fabric guide member 62 is disposed above the sock main body 1 by the downward movement of the movable frame 61, a worker inputs the fabric 3 through the guide hole 62a above the sock main body 1, so that the fabric 3 is disposed at the exact position.

Also, as the movable frame 61 moves upward in order to perform a next process, and the rotation table 20 rotates, so that the mold 40 moves to the the other side press device 52, the gripping member 2 at the outside of the sock main body 1 is heated and pressed.

Hereinafter, an operation of the apparatus for manufacturing the non-slip socks according to the present invention will be described.

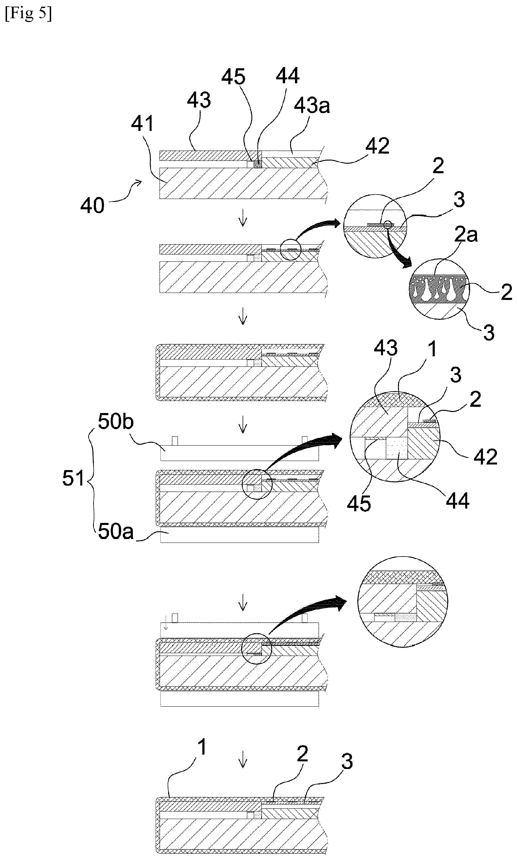

The process of bonding the gripping member 2 to the inner circumferential surface of the sock main body 1 is illustrated in FIG. 5.

Firstly, as illustrated in FIG. 5, a worker allows the fabric 3 bonded on the gripping member 2 to be seated in the fabric guide groove 43a of the mold 40 from a mold side of 6 o'clock direction of FIG. 3.

Here, the gripping member 2 is disposed above the fabric 3 so that that gripping member 2 is bondable to the inner circumferential surface of the sock main body 1.

Thereafter, the sock main body 1 is fitted to the mold 40 on which the fabric 3 is seated so that the inner circumferential surface of the sock main body 1 faces the gripping member 2.

This state corresponds to 7 o'clock direction of FIG. 3.

Thereafter, the mold 40 is disposed on the upper mold 50b and the lower mold 50a of the first one side press device 51a disposed in an about 9 o'clock direction of FIG. 3, and the upper mold 50b moves downward to heat and press the sock main body 1, so that the gripping member 2 inside the sock main body 1 is firstly temporarily bonded to the sock main body 1.

Thereafter, the upper mold 50b ascends to an original position thereof, and then, as the rotation table 20 rotates, the mold 40 moves to the second one side press device 51b. During this time, the sock main body 1 is cooled.

Thereafter, as the second one side press device 51b heats and presses the sock main body 1 in a downward direction to the first one side press device 51a, the gripping member 2 is completely bonded to the inner circumferential surface of the sock main body 1.

This state corresponds to 10 o'clock direction of FIG. 3.

Thereafter, the rotation table 20 rotates again, and the mold 40 is disposed in front of the guide device 60.

When the mold 40 is disposed at the guide device 60, the movable frame 61 moves downward, and the fabric guide member 62 connected thereto is disposed above the sock main body 1.

In this state, the worker inputs another fabric 3 to the guide hole 62a defined in the fabric guide member 62.

Here, as illustrated at a left side of FIG. 3, since the before-mentioned fabric and the after-mentioned fabric are sequentially cut from one roll, and the gripping members 2 on the continuous fabric 3 are alternately arranged along a longitudinal direction thereof, the gripping members 2 disposed on the inner circumferential surface and the outer circumferential surface of the sock main body 1 may be alternately arranged in position.

Thereafter, when the movable frame 61 moves upward, and the rotation table 20 rotates a predetermined section again in a progress direction, the mold 40 is disposed at the first the other side press device 52a.

Then, the gripping member 2 and the outer circumferential surface of the sock main body 1 are firstly temporarily bonded by operating the first the other side press device 52a.

Thereafter, the fabric 3 disposed on the outer circumferential surface of the sock main body 1 is separated from the gripping member 2 as the rotation table 20 rotates a predetermined section again by the worker.

In this process, the sock main body 1 is also cooled.

Thereafter, the rotation table 20 rotates a predetermined section again, and then the gripping member 2 and the outer circumferential surface of the sock main body 1 are secondarily completely bonded in the second the other side press device 52b.

Also, as another worker removes the fabric 3 bonded when the inner gripping member 2 is installed in the manufactured sock, a series of manufacturing processes are finished.

As described above, the present invention may exactly and alternately arrange the gripping members 2 on the inside and the outside of the sock main body 1 and have the improved working speed to provide the sock having the excellent non-slip function to various consumers in addition to sports athletes of a specific game.

### INDUSTRIAL APPLICABILITY

The apparatus for manufacturing the non-slip socks according to the present invention may be applied to manufacturing of various footwears such as sports socks, daily socks, summer socks, winter socks, outer socks, and stockings.

**[Description of symbols]**

| | | | |
|---|---|---|---|
| 1: | Sock main body | 2: | Grapping member |
| 2a: | Hot-melt adhesive | 2b: | Column cell |
| 2c: | Non-slip groove | 3: | Fabric |
| 10: | Support frame | 11: | Guide groove |
| 12: | Driving motor | 20: | Rotation table |
| 30: | Mold connection member | 40: | Mold |
| 41: | Connection plate | 41a: | Through-hole |
| 41b: | Stepped portion | 42: | Seat member |
| 42a: | Protruding portion | 42b: | Adjusting bolt |
| 43: | Elevation member | 43a: | Fabric guide groove |
| 44: | Elastic member | 45: | Plate spring |
| 46: | Suction hole | 46a: | Suction pump |
| 50: | Press device | 50a: | Lower mold |
| 50b: | Upper mold | 50c: | Heating wire |
| 50d: | Suction hole | 50e: | Suction pump |
| 51: | One side press device | 51a: | First one side press device |
| 51b: | Second one side press device | 52: | The other side press device |
| 52a: | First the other side press device | 52b: | Second the other side press device |
| 60: | Guide device | 61: | Movable frame |
| 62: | Fabric guide member | 62a: | Guide hole |

## Claims

1. An apparatus for manufacturing non-slip socks, which arranges a gripping member (2) on a surface of a sock main body (1) fitted to a mold and presses and bonds the gripping member (2) to the surface of the sock main body (1) by using a press, the apparatus comprising:
a support frame (10) in which a guide groove (11) is formed in an upper portion thereof, and a driving motor (12) is installed at one side of a lower portion thereof;
a rotation table (20) seated in the guide groove (11) and connected with the driving motor (12) to rotate along the guide groove (11) by an operation of the driving motor;
a mold connection member (30) having one side connected to the rotation table (20) and the other side protruding in an outward direction of the rotation table (20) and provided in plurality to be arranged radially around a center of the rotation table (20);
a mold (40) having one side connected with the mold connection member (30) and an upper portion in which a fabric guide groove (43a) in which a fabric (3) to which the gripping member (2) is bonded is seated is formed, and to which the sock main body (1) is fitted;
a press device (50) installed adjacent to one side of the support frame (10) and comprising a lower mold (50a) configured to support a lower portion of the mold (40), an upper mold (50b) spaced upward from the lower mold (50a), a heating wire (50c) installed in one of the lower mold (50a) and the upper mold (50b), and an actuator (50d) connected to one of the lower mold (50a) and the upper mold (50b) to elevate the connected one, so as to heat and press the sock main body (1) fitted to the mold (40), thereby bonding the gripping member (2) to the sock main body (1); and
a guide device (60) installed adjacent to one side of the support frame (10) and comprising a movable frame (61) vertically moving toward the mold (40) to which the sock main body (1) is fitted, wherein a fabric guide member (62), in which a guide hole (62a) configured to guide an arranged position of the fabric (3) on the sock main body (1) fitted to the mold (40) is formed, is installed on the movable frame (61),
wherein the mold (40) comprises:
a connection plate (41) having one side connected to the mold connection member (30);
a seat member (42) installed on the connection plate (41) and on which the fabric (3) to which the gripping member (2) is bonded is seated; and
an elevation member (43) in which a fabric guide groove (43a) through which the seat member (42) passes is formed therein and having a lower portion connected with the connection plate (41) through an elastic member (44) to vertically move by an upper pressure.

2. The apparatus of claim 1, wherein the press device (50) comprises:
one side press device (51) arranged in one side direction along a circumference of the support frame (10) based on the guide device (60) to heat and press the fabric (3) disposed between the sock main body (1) and the mold (40); and
the other side press device (52) arranged in the other side direction along the circumference of the support frame (10) based on the guide device (60) to heat and press the fabric (3) disposed outside the sock main body (1) fitted to the mold (40).

3. The apparatus of claim 2, wherein the one side press device (51) comprises a first one side press device (51a) and a second one side press device (51b), which have a predetermined angle with respect to a center of the support frame (10),
the the other side press device (52) comprises a first the other side press device (52a) and a second the other side press device (52b), which have an angle that is two times of the angle of the first one side press device (51a) and the second one side press device (51b), and
the fabric (3) that is firstly heated and pressed to the outside of the sock main body (1) between the first the other side press device (52a) and the second the other side press device (52b) is detached from the gripping member (2).

4. The apparatus of claim 1, wherein the elastic member (44) is made of flexible foam, and
a metallic plate spring (45) is further installed between the connection plate (41) and the elevation member (43).
